# EUROPÄISCHE PATENTSCHRIFT

(11) **EP 2 101 309 B1**
(45) Veröffentlichungstag und Bekanntmachung des Hinweises auf die Patenterteilung: **29.06.2011**
(21) Anmeldenummer: 09152944.6
(22) Anmeldetag: 16.02.2009
(51) Int. Cl.: G09F 13/04, G02B 6/00, F21S 8/00

(54) **Leuchtkasten für Werbeflächen**
Light box for advertising surfaces
Boîtier lumineux pour surfaces de réclame

(30) Priorität: 13.03.2008 CH 3672008; 27.03.2008 CH 4552008; 26.09.2008 CH 15292008
(43) Veröffentlichungstag der Anmeldung: 16.09.2009
(73) Patentinhaber: Burri public elements AG, 8152 Glattbrugg (CH)
(72) Erfinder: Burri, Martin, 8302 Kloten (CH)
(74) Vertreter: Schneider Feldmann AG Patent- und Markenanwälte

(56) Entgegenhaltungen:
- DE-A1- 10 322 561
- DE-U1-202004 007 644
- US-A1- 2005 157 500

## Beschreibung

Die vorliegende Erfindung betrifft ein Leuchtmodul für Innen- und Aussenanwendungen gemäss Oberbegriff des Patentanspruches 1.

Werbeflächen. Üblicherweise besitzen solche Leuchtkästen eine Lichtstreuplatte in die Licht eingespiesen wird. Eine solche Lösung zeigt beispielsweise das Schweizer Patent CH-692 684, hier wird allerdings das Licht in einen Hohlraum eingespiesen der zwischen zwei giebeldachförmig zueinander geneigten Lichtstreuplatten gebildet ist. In einer Weiterentwicklung gemäss der CH-694 624 ist ein Einspeiseprofil bekannt in dem eine Leuchtröhre gehalten ist mittels der Licht in eine Lichtstreuplatte eingespiesen wird, wobei ein schwenkbarer klemmender Schenkel dieses Profil öffen- und schliessbar macht und wobei der schwenkbare Schenkel auf die Lichtstreuplatte zum Aufliegen kommt und so das Auswechseln der Elektrokomponenten und eines allfälligen Plakates ermöglicht.

Leuchtkästen der hier interessierenden Art werden sowohl im Innenbereich wie auch im Aussenbereich eingesetzt und sie haben je nach der Gestaltung ein oder zwei Beleuchtungsflächen vor denen die im Durchleuchtbetrieb wirkenden Plakate gehalten sind. Die als Leuchtmittel eingesetzten Leuchtstoffröhren benötigen immer noch zirka 100 bis 200 Watt pro Stunde. Es ist durchaus bekannt, dass Leuchtdioden mit wesentlich weniger Energieverbrauch einsetzbar wären. Aus der DE-A-2 530 775 sind Diodenketten bekannt, die praktisch als Endlosstreifen mit Klebefolien angeboten werden. Hierbei sind die Leiterbahnen auf einer Trägerfolie aufgedruckt und darüber eine Klebschicht angebracht. Über die Klebschicht ist eine Deckfolie aufgelegt, welche Durchbrüche aufweist durch welche die Leuchtdioden hindurch ragen, die direkt auf die Trägerfolie angebracht sind.

Es wurden Versuche durchgeführt bei denen in zwei gegenüberliegenden Kanten einer Lichtstreuplatte eine Rille eingefräst wurde wobei auf diese Seitenkante eine Lichterkette mit einem Klebfolienband, wie zuvor beschrieben, direkt auf die Lichtstreuplatte aufgeklebt wurde. Bei dieser Lösung haben sich zwei Probleme gezeigt, nämlich zum Einen hat sich eine erhebliche Erhitzung eingestellt die bei Acrylglasplatten unerwünscht ist und zum Zweiten sind durch die erhöhten Temperaturen die Leuchtdioden selber überhitzt und entsprechend hat sich deren Lebensdauer erheblich reduziert.

Beim Auftreten von defekten Dioden hat sich gezeigt, dass man die Lichterketten mit Klebebandsystem zum Einen nicht genügend restfrei abziehen konnte und zum Anderen beim Entfernen diese Lichterketten insgesamt zerstört wurden. Das Auswechseln von einzelnen Dioden oder Diodenketten ist folglich bei diesem Konzept nur mit sehr grossem Aufwand möglich. Obwohl diese Diodenketten preiswert sind, hat sich eine solche Lösung als nicht verwendbar erwiesen, da bei Ausfällen das gesamte Leuchtmodul samt der teueren Lichtstreuplatte ersetzt werden muss. Durch die Verwendung von Diodenleuchtketten hat sich jedoch positiv erwiesen, dass der Energieverbrauch praktisch nur noch halb so hoch war.

Die Verwendung von Leuchtdioden bei kleineren Leuchtkästen ist bereits bekannt. In der GB-A-2080508 ist ein Profil gezeigt, in dem eine U-förmige Nut eingelassen ist, in welche eine Diodenlichterkette eingelegt oder eingeklebt wird. Ferner zeigt die DE 202 005 002 539U einen Bilderrahmen in den, zwischen einer Scheibe und dem zu beleuchtenden Bild im Hohlraum hineinragende Leuchtdioden angeordnet sind. Ein Displayleuchtkasten mit seitlicher Einspeisung von Licht mittels Leuchtdioden ist auch aus der Publikation JP-A-2005345934 bekannt.

Die Französischen Publikation FR-A-2863093 zeigt einen Sockel oder Rahmen in dem ein Bildträger steht und mittels einer Diodenlichterkette beleuchtet wird.

Letzlich zeigt die DE 202004007644U ein Leuchtmodul gemäss Oberbegriff des Patentanspruchs 1, bei dem eine Dioden-Kette oder -Leiste am Trägersteg gehalten ist, auf der die Lichtstreuplatte (3) steht. Leuchtkästen für Werbeflächen werden im 24 Stundenbetrieb eingesetzt. Daher ist es besonders sinnvoll hier Energie einzusparen. Da aber einerseits bereits eine grosse Anzahl von Leuchtkästen besteht die mit Leuchtröhren ausgerüstet sind, ist es eine Aufgabe der vorliegenden Erfindung eine Lösung anzubieten, die für neue Leuchtkästen relativ kostengünstig realisiert werden kann und es andererseits erlaubt, bestehende Leuchtkästen der Eingangs genannten Art mit möglichst geringem Aufwand umzurüsten.

Diese Aufgaben löst ein Leuchtmodul der Eingangs genannten Art der sich dadurch auszeichnet, dass das Einspeiseprofil zwei parallele Halteschenkel aufweist, zwischen denen ein Trägersteg verläuft, auf den eine Leiterplatte angebracht ist, die mit Leuchtdioden bestückt ist, wobei der Trägersteg an der der Leiterplatte abgelegenen Seite mit Kühlrippen versehen ist und an dem distanziert über dem Trägersteg auf der Seite der Lichtstreuplatte zwei aufeinander zugerichtete Trägerrippen angeformt sind, die einen mittigen, durchgehenden Lichteintrittspalt freilassen und von den ersten freien Längsendkanten der Halteschenkel soweit entfernt verlaufen, dass die Lichtstreuplatte zwischen den beiden Halteschenkel klemmend einsteckbar gehalten ist.

Die Halteschenkel können an den zweiten freien Enden abgewinkelt sein, um so ein offenes Hohlkastenprofil zu bilden, welches der Fixierung dient, in dem hier Trägermittel eingreifen können oder beispielsweise Muttern- oder Nuttensteine eingeschoben werden können, die zur Fixierung der Lichtstreuplatte im Leuchtkasten dienen. Bei der Verwendung von Leuchtdioden anstelle von Leuchtröhren wird das Licht kegelförmig in die Lichtstreuplatte eingebracht. Diese Lichtkegel sind im Randbereich sichtbar. Um diesen Effekt zu reduzieren ist es vorteilhaft das Lichtmodul aus einer ersten Acrylglasplatte als Lichtstreuplatte besteht, in die das Licht eingespiesen wird und mindestens einer darauf auf der einen Beleuchtungsfläche aufliegenden Diffusionsplatte aus Acrylglas, die durchgehend weiss gefärbt und beidseitig satiniert ist, besteht.

Dieser Aufbau hat sich insbesondere auch bewährt für Leuchtkästen, bei denen beidseitig Werbeflächen angebracht sind, wobei es in diesem Falle erforderlich ist beidseitig auf der Lichtleitplatte eine Lichtdiffusionsplatte anzuordnen. Weitere vorteilhafte Ausgestaltungsformen des Erfindungsgegenstandes gehen aus der nachfolgenden Beschreibung hervor.

In den Zeichnungen sind verschiedene bevorzugte Ausführungsformen des Erfindungsgegenstandes dargestellt und nachfolgend beschrieben.

Es zeigt:
- Figur 1: ein Leuchtmodul mit allseitiger Lichteinspeisung in die Lichtstreuplatte unter Verwendung eines erfindungsgemässen Einspeiseprofils und
- Figur 2: dasselbe Leuchtmodul in einem Vertikalschnitt.
- Figur 3: zeigt das erfindungsgemässe Lichteinspeiseprofil im Schnitt, welches geeignet ist für eine Lichtstreuplatte mit einseitiger Leuchtfläche, während
- Figur 4: ein solches Einspeiseprofil zeigt, welches grösser dimensioniert ist für die Verwendung bei einer Lichtstreuplatte mit beidseitigen Leuchtfläche.
- Figur 5: zeigt eine Gesamtansicht eines Leuchtkastens mit eingebautem Leuchtmodul im kleineren Massstab während
- Figur 6: einen verkürzten Vertikalschnitt durch den Leuchtkasten nach Figur 5 und
- Figur 7: einen Horizontalschnitt zeigt.
- Figur 8: stellt wiederum einen verkürzten Vertikalschnitt durch einen Leuchtkasten mit doppelseitigem Leuchtmodul dar, während
- Figur 9: diesen Leuchtkasten in einem verkürzten Horizontalschnitt zeigt.
- Figur 10: zeigt in verkürzter Weise ein Leuchtmodul mit einer federgestützten Kompensationslagerung zum Ausgleich von Wärmedehnungen.
- Figur 11: dieses Leuchtmodul in einem Horizontalschnitt, und

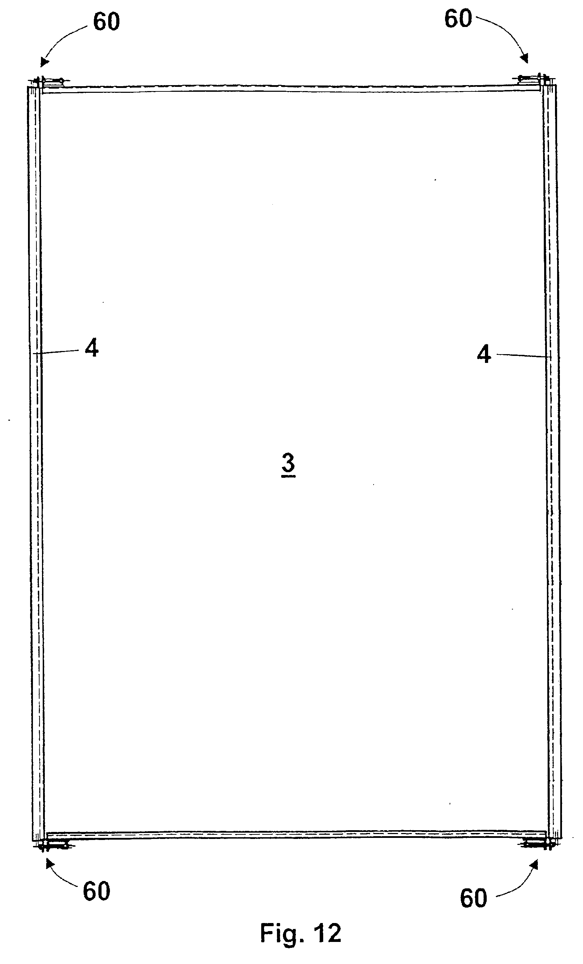

- Figur 12: dieses Leuchtmodul in einer unverkürzten Ansicht.

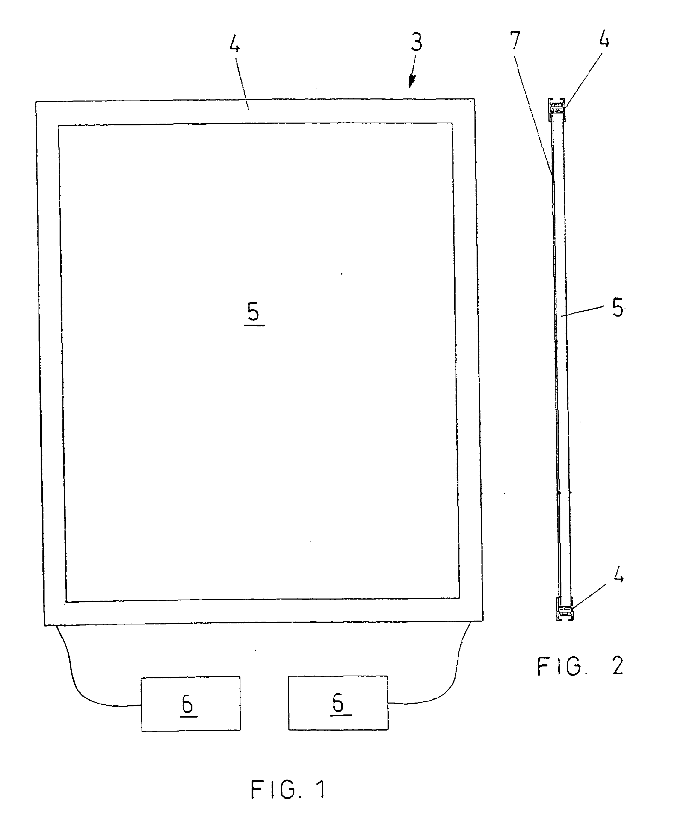

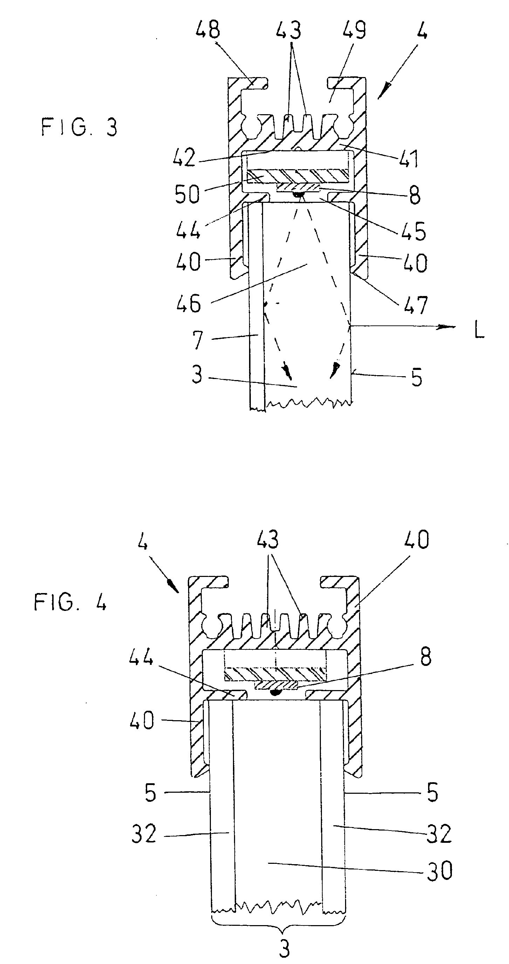

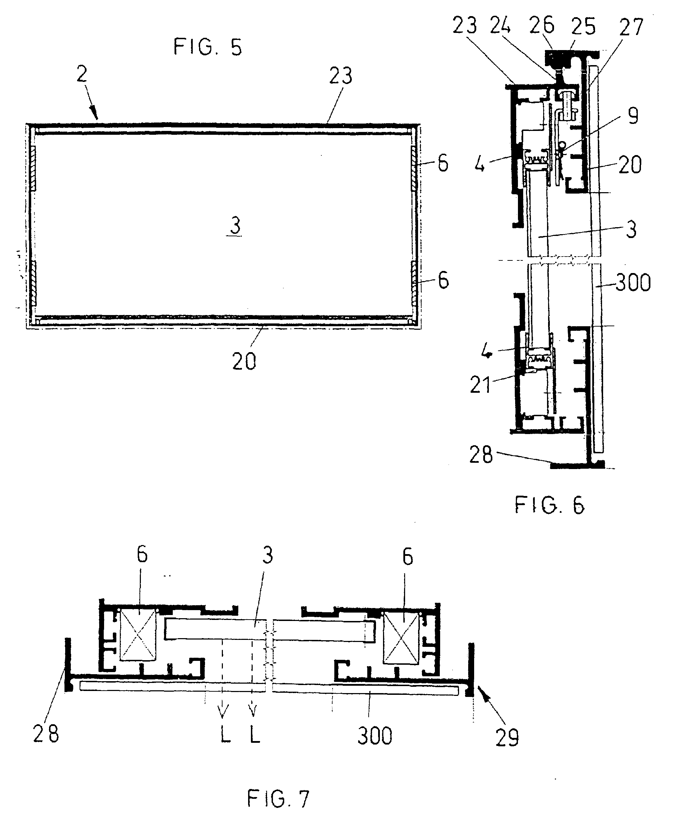

In der Figur 1 ist nur die Lichtstreuplatte 3 dargestellt, die mit einem Einspeiseprofil 4 allseitig umfasst ist. Die Speisung der Dioden, die im Einspeiseprofil 4 gehalten sind, erfolgt über die Netzgeräte 6. Bei der hier dargestellten Lösung handelt es sich um ein Leuchtmodul das lediglich für eine Leuchtfläche 5 verwendet wird. In diesem Fall ist auf der der Leuchtfläche 5 gegenüberliegenden Seite eine Reflektionsschicht 7 angebracht. Dies kann eine weiss lackierte Platte sein oder auch eine weisse Folie oder Schaumplatte welche direkt auf der Lichtstreuplatte 3 aufliegt. Das hier dargestellte Leuchtmodul 5 kann als Lichtquelle, für Leuchtwände oder Lichtdecken, oder zur Hinterleuchtung einer Grafik oder eines Plakates eingesetzt werden. Dazu können neben weissen Dioden auch RGB Dioden für farbige Lichteffekte eingebaut werden. Für die Anwendung im Aussenbereich wird das Leuchtmodul 5 üblicherweise in einem Leuchtkasten 1 eingebaut, wie in den Figuren 5 bis 7 dargestellt. Diese Version zeigt einen Leuchtkasten 1 für die Wandmontage. Die Figur 3 zeigt einen Querschnitt durch ein Einspeiseprofil 4 wie es verwendet wird in einem Leuchtkasten 1 mit lediglich einer Beleuchtungsfläche 5. Die äussere Begrenzung des Einspeiseprofils 4 ist in etwa rechteckig. Die beiden längeren gegenüberliegenden Seiten werden durch zwei Halteschenkel 40 gebildet. Zwischen diesen beiden parallelen Halteschenkeln 40 verläuft ein Trägersteg 41. Dieser Trägersteg 41 besitzt einerseits eine plane Auflageflache 42 auf die eine Leiterplatte 50 aufzuliegen vermag. Auf der der Auflagefläche 42 gegenüberliegenden Fläche sind am Trägersteg 41 eine Vielzahl von Kühlrippen 43 abgeformt. Je nach der Grösse des Querschnittes des Einspeiseprofils 4 werden mehr oder weniger Kühlrippen 43 vorhanden sein. Distanziert über dem Trägersteg 41 in Richtung zur Lichtstreuplatte 3 gelegen sind auf der Innenseite der beiden parallelen Halteschenkel 40 nach Innen gerichtete Trägerrippen 44 angeformt. Zwischen den beiden Trägerrippen 44 verbleibt ein Lichteintrittspalt 45. Durch diesen Lichteintrittspalt 45 gelangt das Licht der Leuchtdioden 8 auf die Stirnfläche beziehungsweise Kante der Lichtstreuplatte 3 und dringt in dieselbe ein. Hier wird das Licht innerhalb dieser Lichtstreuplatte 3 sich durch Reflektion gleichmässig verteilen, wobei ein Teil über die Beleuchtungsfläche 5 austritt. Auf der der Beleuchtungsfläche 5 abliegenden Seite ist hier eine Reflektionsschicht 7 angebracht.

Die Halteschenkel 40 erstrecken sich auch über den Bereich der Trägerrippen 4 weiter hinaus und bilden einen U-förmigen Aufnahmekanal 46 in dem die Lichtstreuplatte 3 mit der Reflektionsschicht 7 gehalten ist, wobei einerseits die Trägerrippen 44 auf der Kante der Lichtstreuplatte 3 aufliegen, während andererseits die Lichtstreuplatte 3 zwischen den beiden Halteschenkel 40 klemmend gehalten ist. Hierzu weisen die beiden parallelen Halteschenkel 40 auf der Innenseite aufeinander zugerichtet mindestens eine über die gesamte Länge verlaufende Haltenase 47 auf. Damit ist die eigentliche Kontaktfläche zwischen der Lichtstreuplatte 3 und dem Einspeiseprofil 4 minimal. Damit wird auch relativ wenig Wärmeleitung vom Einspeiseprofil 4 in die Lichtstreuplatte 5 erfolgen.

Die parallelen Halteschenkel 40 erstrecken sich auch auf der anderen Seite des Trägersteges 41 bis über die Kühlrippen 43 hinweg und diese zweiten freien Enden der Halteschenkel 40 sind hier abgewinkelt. Diese abgewinkelten Enden bilden Teilwände 48, die zusammen mit den Teilbereichen der parallelen Halteschenkel 40 und den Oberflächen der Kühlrippen 43 ein offenes Kastenprofil 49 definieren. In diesem offenen Kastenprofil 49 können Mittel eingreifen, die der Lagerung beziehungsweise Fixierung der Lichtstreuplatte 3 in der Rahmenkonstruktion eines Leuchtkasten 1 dienen. Dies können beispielsweise Muttern- oder Nuttensteine sein, die hier eingeschoben werden oder aber auch ein Trägerstab, der zwischen den beiden Teilwänden 48 in das Einspeiseprofil 4 eingreift.

In der Figur 4 ist eine zweite Ausführungsform des Einspeiseprofils 4 dargestellt, welches grösser dimensioniert ist um eine Lichtstreuplatte 3 aufzunehmen, die so gestaltet ist, dass sie beidseitig Beleuchtungsflächen 5 aufweist. Während die Lichtstreuplatte 3 gemäss der Figur 3 einen herkömmlichen Aufbau aufweist, ist die Lichtstreuplatte 3 in der Figur 4 in Weiterführung der Erfindung besonders gestaltet. Die Lichtstreuplatte 3 ist hier dreilagig gestaltet. Im Zentrum befindet sich eine Acrylglasplatte 30. Sämtliche Längskanten, an denen Licht eingespiesen wird, sind poliert. An den Lichtaustrittsflächen ist die Acrylglasplatte 30 mit einer feinen Struktur versehen, die einen gleichmässigen Lichtaustritt bewirkt. Eine solche Strukturierung 31 (nicht dargestellt) wird beispielsweise durch Sandstrahlen oder Schleifen als eine Mattierung realisiert, die einen diffusen Lichtaustritt realisiert. Trotzdem ist dies allein noch ungenügend, um einerseits die Lichtkegelwirkung der Leuchtdioden zu vermindern und zum Anderen insbesondere bei der doppelseitigen hier interessierenden Verwendung um zu verhindern, dass die beidseitig angebrachten Werbeflächen nicht teilweise auf der Gegenseite sichtbar werden. Zur Erzielung von Teilreflektionen sind über diesen Strukturierungen 31 Lichtdiffusionsplatten 32 angebracht. Während somit die zentrale Platte 30 aus Acrylglas als Lichtleitplatte funktioniert, sind beidseitig darauf aufliegend Lichtdiffusionsplatten 32 vorhanden, die eine möglichst gleich wirkende Lichtverteilung realisieren und andererseits den unerwünschten Effekt von Teilreflektionen von einer Werbefläche zur anderen unterbinden. Die Lichtdiffusionsplatten 32 sind nicht aus klarem, sondern aus weiss eingefärbtem Acrylglas gefertigt. Solche Acrylglasplatten werden im Handel angeboten, als satinierte Opalplatten. Es ist klar, dass diese Sandwichkonstruktion einer Lichtstreuplatte 3 einen grösseren Querschnitt hat als eine Lichtstreuplatte 3 die nur einseitig genutzt wird und entsprechend ist auch das Einspeiseprofil 4 im Querschnitt grösser gestaltet um die höhere Wärmeentwicklung der LED abführen zu können, sind bei dieser Version auch wesentlich mehr Kühlrippen 43 zu sehen. Bei dieser Ausführung sind die bereits zuvor beschriebenen Merkmale, die an sich gleich sind, auch mit gleichen Bezugszahlen versehen und diese Merkmale sind nicht nochmals erläutert. Es wird lediglich daraufhin gewiesen, dass die Trägerrippen 44 eine genügende Breite haben müssen, so dass nicht nur die Lichtdiffusionsplatten 32 aufliegen, sondern sowohl die Lichtdiffusionsplatten 32 als auch die mittlere Acrylglasplatte 30 noch auf den Trägerrippen 44 beidseitig zum Aufliegen kommt. Die einzelnen Schichten der Lichtstreuplatte 3, nämlich die Acrylglasplatt 30 und die beiden darauf aufliegenden Lichtdiffusionsplatten 32, brauchen nämlich nicht miteinander verklebt oder verschraubt sein, sondern können lediglich klemmend aufeinander gehalten werden, wie dies hier dargestellt ist.

Selbstverständlich kann auch bei der Version gemäss der Figur 3, bei der nur eine Beleuchtungsfläche 5 genutzt wird, auf jener Seite eine Lichtdiffusionsplatte 32 angebracht sein. Denn hierdurch wird zusätzlich der bereits beschriebene Effekt der Lichtkegel im Randbereich weitgehend eliminiert.

In der Figur 5 ist ein Leuchtkasten 1 schematisch dargestellt unter Weglassung des deckenden Rahmens. Die Rahmenkonstruktion 2 wird aus 4 Profilabschnitten gebildet. Von diesen 4 Profilabschnitten sind 3 Profilabschnitte 20 völlig identisch. Sie bestehen aus einem L-Profil, wobei an den, zum Innenraum gerichteten beiden Seiten der Schenkel diverse Stege angeformt sind. Diese Stege beziehungsweise Stege mit Abkröpfungen bilden Aufnahmeräume zur Befestigung der Lichtstreuplatte 3 zur Halterung von Netzgeräten 6 oder zur Fixierung von Plakathalteklammern 9. Zudem dient der längere der beiden Schenkeln des wesentlichen L-förmigen Profils dazu an einer Wand montiert zu werden. Die eigentliche Lichtstreuplatte 3 steht im unteren L-förmigen Profilabschnitt 20 auf Auflagestegen 21. Eine Klemmplatte 22 stellt sicher, dass die Lichtstreuplatte 3 von den Auflagestegen 21 nicht hinunter rutschen kann. Der bei dieser Ausführungsform oben liegende L-Profilabschnitt 23 unterscheidet sich gegenüber den L-Profilabschnitten 20 lediglich dadurch, dass auf der Aussenseite des kürzeren Schenkels ein Steg 24 mit einer zylindrischen Verdickung 25 angeformt ist. Auf dieser zylindrischen Verdichtung 25 lagert eine zylindrische Halbschale 26, die Teil eines Abdeckprofilabschnittes 27 bildet. Während dieser obere Abdeckprofilabschnitt 27 die angeformte zylindrische Halbschale 26 aufweist, sind die übrigen 3 Abdeckprofilabschnitte 28 ohne diese zylindrische Halbschale ausgerüstet. Die Abdeckprofilabschnitte 27 und 28 bilden wiederum einen Rahmen, der schwenkbar mit der Tragrahmenkonstruktion verbunden ist, über die zuvor beschriebene zylindrische Verdickung 25 beziehungsweise den zylindrischen Halbschalen 26. Die Abschnitte des Abdeckprofils 27 und 28 bilden insgesamt einen Abdeckrahmen, der frontseitig mit einer hochtransparenten Abdeckscheibe 300 den Leuchtkasten 1 verschliesst. Die Abdeckscheibe 300 kann beispielsweise auf dem Abdeckrahmen 29 aufgeklebt sein. Diese einfache Klapprahmenlösung erlaubt nicht nur ein schnelles Auswechseln der Plakate sondern hierdurch werden praktisch auch alle aktiven Elemente direkt zugänglich. So sind im aufgeklappten Zustand die Netzgeräte 6 freiliegend zugänglich ebenso wie die Lichtstreuplatte 3. Die gesamte Lichtstreuplatte 3 mit dem Einspeiseprofil 4 lässt sich nach Abhängen der elektrischen Verbindung und Lösen der Klemmplatte 22 ebenfalls vollständig auswechseln um gegebenenfalls ein oder mehrerer defekte Lichtdioden auszuwechseln. Da die Lichtdioden 8 auf einer Leiterplatte 50 befestigt sind, und diese Leiterplatte 50 innerhalb des Einspeiseprofils 4 einfach ein- und ausschiebbar gelagert ist, lässt sich diese Leiterplatte 50 problemlos herausziehen oder -stossen und die defekten Lichtdioden 8 ersetzen. Die nun wieder voll funktionsfähige Lichtstreuplatte 3 inklusive Einspeiseprofil 4 steht nun wieder bereit für eine nächste Auswechslung.

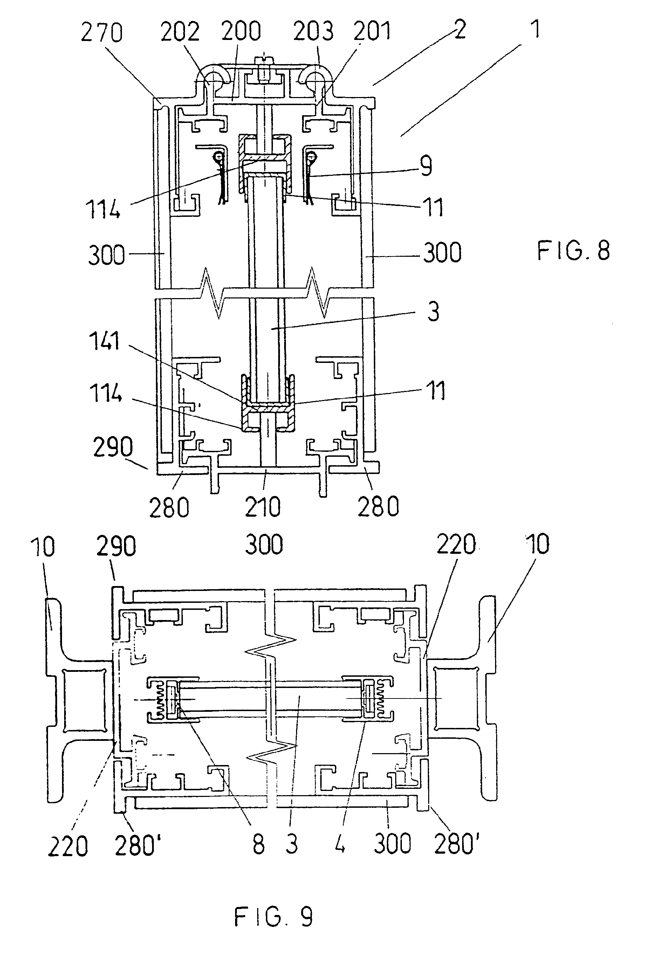

In den Figuren 8 und 9 ist schliesslich noch eine doppelseitig genutzte Lichtstreuplatte 3 gezeigt, in einem entsprechenden Leuchtkasten 1 der beidseitig Werbeflächen aufweist. Die eigentliche Rahmenkonstruktion ist der zuvor beschriebenen Rahmenkonstruktion gemäss den Figuren 5 bis 7 äusserst ähnlich. Ein oberer Profilabschnitt 200 ist wiederum mit nun beidseitig vorhandenen Stegen 201 versehen an denen zylindrische Verdickungen 202 vorhanden sind. Auf den zylindrischen Verdickungen 202 lagern auch hier wieder zylindrische Halbschalen 203, die einen Teil vom jeweiligen Abdeckprofilabschnitt 280 bilden. Der dem oberen Profilabschnitt 200 gegenüberliegende untere Profilabschnitt 210 ist praktisch zum oberen Profilabschnitt baugleich, weist jedoch nicht die zylindrische Verdickung 202 auf. Die seitlichen Profilabschnitte 220 sind beidseitig gleich und weisen auch verschiedenen Stege, die zum Innenraum gerichtet sind, auf. Die Aussenflächen sind jedoch plan so dass diese geeignet sind an Stützen 10 befestigt zu werden. Auch hier ist wieder ein Abdeckrahmen 290 vorhanden, der obere Abdeckprofilabschnitte 280 mit zylindrischen Halbschalen 203 aufweist. Die unteren Abdeckprofilabschnitte 280 weisen diese zylindrische Halbschalen nicht auf. Die seitlichen Profilabschnite des Abdeckrahmens 290 sind hier als Abdeckprofilabschnitte 280' bezeichnet und weichen in der Formgestaltung von den Profilabschnitten 280 leicht ab. Auf den beidseitigen Abdeckrahmen 290 sind wiederum Abdeckscheiben 300 aufgeklebt. Diese können aus Gewichtsgründen auch wiederum aus Acrylglas gefertigt sein. Statt der hochtransparenten Acrylglasplatte können, falls das Gewicht keine Rolle spielen würde, auch mineralische Glasplatten vorgesehen sein. An den seitlichen Längskanten der Lichtstreuplatte 3 sind die Einspeiseprofile 4 vorhanden. An den unteren und oberen Längskanten der Lichtstreuplatte 3 sind Halteprofile 11 vorgesehen. Auch das Halteprofil 11 besitzt gleich wie das Einspeiseprofil 4 parallele Halteschenkel 114, zwischen denen die Lichtstreuplatte 3 klemmend gehalten ist. Der Abstand zwischen den beiden Halteprofilabschnitte 11 entspricht mindestens der Grösse der Lichtstreuplatte 3 plus deren maximalen auftretenden thermischen Längenveränderung in dieser Richtung. Die Halteprofile entsprechen in der Form den Einspeiseprofilen 4, doch weisen diese Profilabschnitte weder Kühlrippen noch Trägerrippen auf. Die Lichtstreuplatte 3 liegt einseitig auf dem Trägersteg 141 auf.

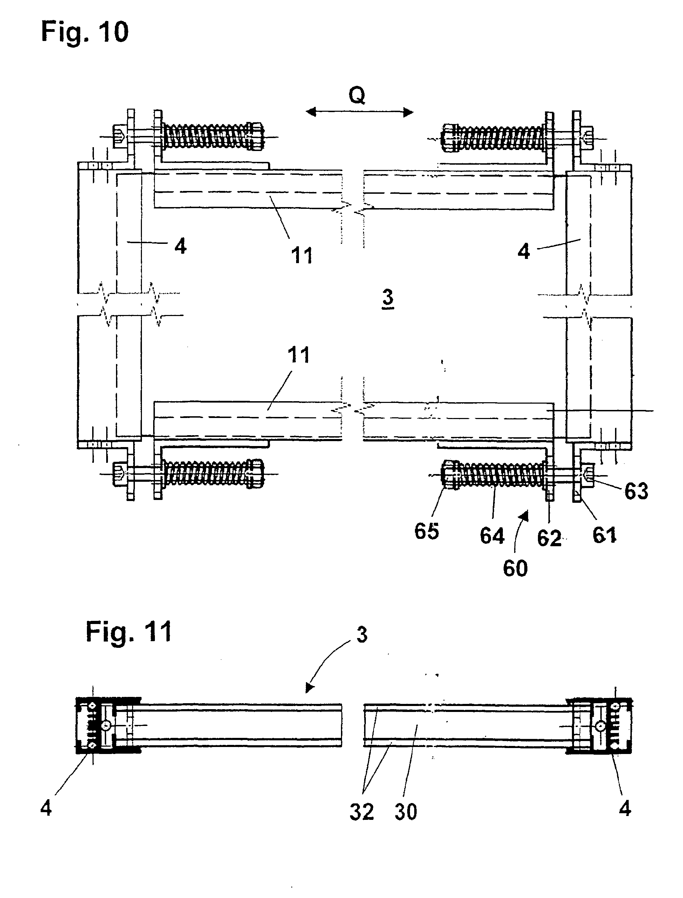

Die Figur 10 zeigt in verkürzter Weise ein Leuchtmodul mit einer federgestützten Kompensationslagerung 60 zum Ausgleich von Wärmedehnungen. Die dargestellte Ausführungsform ist ähnlich wie diejenige, die in den Figuren 8 und 9 gezeigt ist. Die Lichtstreuplatte 3 ist seitlich von Einspeiseprofilen 4 sowie unten und oben von Halteprofilen 11 gehalten. An den Einspeiseprofilen 4 sind erste Winkelstücke 61 und an den Halteprofilen 11 sind zweite Winkelstücke 62 angebracht. Verbunden sind die beiden Winkelstücke 61,62 über Lagerbolzen 63, und zwar in einer Weise, dass sich eine vom Lagerbolzen 63 geführte Druckfeder 64 einerseits am zweiten Winkelstück 62 und andererseits an einer am Ende des Lagerbolzens aufgeschraubten Bolzenmutter 65 abstützt. Wärmedehnungen der Lichtstreuplatte 3 in der Querrichtung Q werden somit von den Druckfedern 64 kompensiert und ausgeglichen.

Selbstverständlich lässt sich eine derartige Kompensation der Längenausdehnung grundsätzlich auch für andere Ausdehnungsrichtungen anwenden und es sind auch andere Druckfederanordnungen möglich.

### Bezugszeichenliste:

- 1: Leuchtkasten
- 2: Rahmenkonstruktion
- 3: Lichtstreuplatte
- 4: Einspeiseprofil
- 5: Beleuchtungsfläche
- 6: Netzgerät
- 7: Reflektionsschicht
- 8: Leuchtdiode
- 9: Plakathalteklammern
- 10: Stützen
- 11: Halteprofil
- 20: L-Profilabschnitte
- 21: Auflagestege
- 22: Klemmplatte
- 23: oberer L-Profilabschnitt
- 24: Steg
- 25: zylindrische Verdichtung
- 26: zylindrische Halbschale
- 27: oberer Abdeckprofilabschnitt
- 28: Abdeckprofilabschnitte ohne Halbschale
- 29: Abdeckrahmen
- 30: Acrylglasplatte klar
- 31: Strukturierung
- 32: Lichtdiffusionsplatten
- 40: Parallele Halteschenkel
- 41: Trägersteg
- 42: Auflagefläche
- 43: Kühlrippen
- 44: Trägerrippen
- 45: Lichteintrittsspalt
- 46: U-förmiger Aufnahmekanal
- 47: Haltenase
- 48: Teilwand
- 49: offenes Kastenprofil
- 50: Leiterplatte mit Print
- 60: Kompensationslagerung
- 61: erstes Winkelstück
- 62: zweites Winkelstück
- 63: Lagerbolzen
- 64: Druckfeder
- 65: Bolzenmutter
- 114: Halteschenkel
- 141: Trägersteg
- 200: oberer Profilabschnitt
- 201: Stege
- 202: zylindrische Verdichtung
- 203: zylindrische Halbschalen
- 210: unterer Profilabschnitt
- 220: seitlicher Profilabschnitt
- 280: Abdeckprofilabschnitt
- 300: Abdeckscheibe

## Patentansprüche

1. Leuchtmodul für Innen - und Aussenanwendungen als Lichtquelle für Leuchtwände/-decken, zur Ausleuchtung von Grafik oder Werbeflächen mit mindestens einer Lichtstreuplatte (3)an deren mindestens eine Kante Licht einspeisbar ist, welches durch Reflektion in der Lichtstreuplatte (3) sich fortpflanzt und aus dieser mindestens einseitig aus einer der beiden planen Beleuchtungsflächen (5) austritt, wobei die Lichtstreuplatte (3) an mindestens einer, bevorzugterweise an zwei einander gegenüberliegenden Kanten mit einem Einspeisepofil (4) versehen ist, in dem Leuchtmittel (8) angebracht sind, wobei das Einspeiseprofil (4) zwei parallele Halteschenkel (40), zwischen denen die Lichtstrenplatte (3) klemmend gehalten ist, aufweist, zwischen denen ein Trägersteg (41) verläuft auf den eine Leiterplatte mit Print (50) angebracht ist, die mit Leuchtdioden (8) bestückt ist, **dadurch gekennzeichnet, dass** der Trägersteg (41) an der der Leiterplatte (50) abgelegenen Seite mit Kühlrippen (43) versehen ist und distanziert über den Trägersteg (41) auf der Seite der Lichtstreuplatte (3) zwei aufeinander zu gerichtete Trägerrippen (44) angeformt sind, die einen mittigen, durchgehenden Lichteintrittspalt (45) freilassen und von den ersten freien Längsendkanten der Halteschenkel (40) verlaufen.

2. Leuchtmodul nach Anspruch 1, **dadurch gekennzeichnet, dass** die Halteschenkel (40) an den zweiten freien Enden abgewinkelt sind.

3. Leuchtmodul nach Anspruch 1, **dadurch gekennzeichnet, dass** die Lichtstreuplatte (3) aus einer Acrylglasplatte (30) als Lichtleitplatte besteht in die das Licht eingespiesen wird und mindestens einer darauf auf der einen Beleuchtungsfläche aufliegenden Lichtdiffusionsplatte (32) aus Acrylglas, die durchgehend weiss satiniert eingefärbt ist.

4. Leuchtmodul nach Anspruch 3, **dadurch gekennzeichnet, dass** das Leuchtmodul zur beidseitigen Verwendung ausgestaltet ist und beidseitig auf der Lichtleitplatte eine Lichtdiffusionsplatte (32) angeordnet ist.

5. Leuchtmodul nach Anspruch 3, **dadurch gekennzeichnet, dass** auf der Fläche der Lichtleitplatte auf der keine Lichtdiffusionsplatte (32) aufliegt eine Licht reflektierende Schicht angebracht ist.

6. Leuchtmodul nach Anspruch 2, **dadurch gekennzeichnet, dass** die Lichtstreuplatte (3) an zwei einander gegenüberliegenden Seitenkanten mit Einspeiseprofilabschnitten versehen ist, während die beiden anderen Seitenkanten mit Abschnitten eines Halteprofils (11) versehen sind, wobei das Halteprofil (11), bis auf die Weglassung der Kühlrippen (43) und der Trägerrippen (44) , baugleich dem Einspeiseprofil (4) ist.

7. Leuchtmodul nach Anspruch 6, **dadurch gekennzeichnet, dass** die beiden einander gegenüberliegenden Halteprofile (11) soweit von einander distanziert im Leuchtkasten (1) gehalten sind, dass der Abstand zwischen den Halteprofilen (11) mindestens der Grösse der Lichtstreuplatte (3) plus deren maximal auftretenden thermischen Längenveränderung in dieser Richtung entspricht.

8. Leuchtmodul nach Anspruch 1, **dadurch gekennzeichnet, dass** dieses innerhalb einer Rahmenkonstruktion zusammen mit mindestens einem elektrisches Netzgerät untergebracht ist.

9. Leuchtmodul nach Anspruch 8, **dadurch gekennzeichnet, dass** die Rahmenkonstruktion zur Wandmontage geeignet ist und die Lichtstreuplatte (3) klemmend an der Rahmenkonstruktion gehalten ist.

10. Leuchtmodul nach einem der Patentansprüche 1 bis 7, **dadurch gekennzeichnet, dass** federgestützte Kompensationslagerungen (60) zur Kompensation von Wärmeausdehnungen der Lichtstreuplatte (3) in mindestens einer Richtung vorhanden sind.

## Claims

1. A luminous module for internal and external applications as a light source for illuminated walls/ceilings for illuminating graphics or advertising surfaces, comprising at least one light scattering plate (3), light being fed onto at least one edge thereof, said light travelling by reflection in the light scattering plate (3) and emerging therefrom on at least one side from one of the two planar illuminating surfaces (5), the light scattering plate (3) being provided on at least one, preferably on two, opposing edges with a feed profile (4), in which lighting means (8) are attached, the feed profile (4) comprising two parallel retaining arms (40) between which the light scattering plate (3) is clampingly held, and between which a support web (41) extends to which a printed-circuit board assembly (50) is attached, which is provided with light-emitting diodes (8), **characterised in that** the support web (41) is provided on the side remote from the printed circuit board (50) with cooling ribs (43), and at a distance above the support web (41) on the side of the light scattering plate (3) two support ribs (44) which are oriented towards one another are integrally formed, which open up a central, continuous light inlet gap (45) and extend from the first free longitudinal end edges of the retaining arms (40).

2. The luminous module according to Claim 1, **characterised in that** the retaining arms (40) are bent-back at the two free ends.

3. The luminous module according to Claim 1, **characterised in that** the light scattering plate (3) consists of an acrylic glass plate (30) as a light guide plate, into which the light is fed, and at least one light diffusion plate (32) which is made of acrylic glass positioned thereon on the one illuminating surface and which is coloured white throughout with a satin finish.

4. The luminous module according to Claim 3, **characterised in that** the luminous module is configured for use on both sides and a light diffusion plate (32) is arranged on both sides on the light guide plate.

5. The luminous module according to Claim 3, **characterised in that** a light reflecting layer is applied to the surface of the light guide plate, on which no light diffusion plate (32) is positioned.

6. The luminous module according to Claim 2, **characterised in that** the light scattering plate (3) is provided on two opposing side edges with feed profile portions, whilst the two other side edges are provided with portions of a retaining profile (11), the retaining profile (11) being of the same construction as the feed profile (4), apart from the omission of the cooling ribs (43) and the support ribs (44).

7. The luminous module according to Claim 6, **characterised in that** the two opposing retaining profiles (11) are held at a sufficient distance from one another in the light box (1), such that the spacing between the retaining profiles (11) corresponds at least to the size of the light scattering plate (3), plus the maximum thermal longitudinal change thereof occurring in this direction.

8. The luminous module according to Claim 1, **characterised in that** said luminous module is accommodated within a frame structure, together with at least one electrical power supply unit.

9. The luminous module according to Claim 8, **characterised in that** the frame structure is suitable for wall mounting and the light scattering plate (3) is clampingly held on the frame structure.

10. The luminous module according to one of Claims 1 to 7, **characterised in that** spring-assisted compensation bearings (60) are present for compensating for thermal expansion of the light scattering plate (3) in at least one direction.

## Revendications

1. Module lumineux pour applications intérieures et extérieures comme source de lumière pour des parois lumineuses/plafonds lumineux, pour l'éclairage d'inscriptions graphiques ou de surfaces publicitaires avec au moins une plaque de diffuseur de lumière (3) sur au moins une arête de laquelle de la lumière peut être alimentée, laquelle se propage par réflexion dans la plaque de diffuseur de lumière (3) et ressort de celle-ci au moins d'un côté hors d'une des deux surfaces d'éclairage (5) planes, dans lequel la plaque de diffuseur de lumière (3) est pourvue sur au moins une, de préférence sur deux arêtes se faisant face l'une l'autre d'un profilé d'alimentation (4), dans lequel des moyens lumineux (8) sont montés, dans lequel le profilé d'alimentation (4) présente deux pans de retenue (40) parallèles entre lesquels la plaque de diffuseur de lumière (3) est retenue par serrage , entre lesquels un gradin porteur (41) s'étend sur lequel une plaque de circuit imprimé avec une impression (50) est montée, qui est équipée de diodes lumineuses (8), **caractérisé en ce que** le gradin porteur (41) est pourvu de nervures de refroidissement (43) sur le côté qui se détourne de la plaque de circuit imprimé (50)et deux nervures porteuses (44) tournées l'une vers l'autre en étant espacées par le gradin porteur (41) sont façonnées sur le côté de la plaque de diffuseur de lumière (3), lesquelles laissent à découvert une fente d'introduction de lumière (45) centrale, traversante et s'étendent à partir des premières arêtes d'extrémité longitudinale libres des pans de retenue (40).

2. Module lumineux selon la revendication 1, **caractérisé en ce que** les pans de retenue (40) sont coudés aux deuxièmes extrémités libres.

3. Module lumineux selon la revendication 1, **caractérisé en ce que** la plaque de diffuseur de lumière (3) est constituée d'une plaque en verre acrylique (30) comme plaque conductrice de lumière dans lequel la lumière est alimentée et d'au moins une plaque de diffusion de lumière (32) reposant sur une des surfaces d'éclairage est constituée de verre acrylique, qui est coloré uniformément en blanc satiné.

4. Module lumineux selon la revendication 3, **caractérisé en ce que** le module lumineux est conçu pour une utilisation des deux côtés et une plaque de diffusion de lumière (32) est disposée des deux côtés sur la plaque conductrice de lumière.

5. Module lumineux selon la revendication 3, **caractérisé en ce que** une couche réfléchissant la lumière est appliquée sur la surface de la plaque conductrice de lumière sur laquelle aucune plaque de diffusion de lumière (32) ne repose.

6. Module lumineux selon la revendication 2, **caractérisé en ce que** la plaque de diffuseur de lumière (3) est pourvue sur deux arêtes latérales se faisant face l'une l'autre de portions de profilés d'alimentation, alors que les deux autres arêtes latérales sont pourvues de portions d'un profilé de retenue (11), dans lequel le profilé de retenue (11), est identique au profilé d'alimentation (4), hormis l'omission des nervures de refroidissement (43) et des nervures porteuses (44).

7. Module lumineux selon la revendication 6, **caractérisé en ce que** les deux profilés de retenue (1) se faisant face l'un l'autre sont maintenus dans le boîtier lumineux (1) en étant espacés l'un de l'autre au point que l'espacement ente les profilés de retenue (11) correspond au moins à la taille de la plaque de diffuseur de lumière (3) plus sa variation thermique de longueur maximale dans cette direction.

8. Module lumineux selon la revendication 1, **caractérisé en ce que** celui-ci est renfermé à l'intérieur d'une construction de châssis conjointement à au moins un appareil d'alimentation électrique.

9. Module lumineux selon la revendication 8, **caractérisé en ce que** la construction de châssis est appropriée à un montage mural et la plaque de diffuseur de lumière (3) est maintenue par serrage sur la construction de châssis.

10. Module lumineux selon une des revendications 1 à 7, **caractérisé en ce que** des paliers de compensation (60 appuyés sur ressort à des fins de compensation des dilatations thermiques de la plaque de diffuseur de lumière (3) sont présents dans au moins une direction.
